# EUROPEAN PATENT APPLICATION

(11) **EP 3 159 198 A1**
(43) Date of publication of application: **26.04.2017**
(21) Application number: 15191251.6
(22) Date of filing: 23.10.2015
(51) Int. Cl.: B60H 1/00

(54) **AIR CONDITIONING SYSTEM, IN PARTICULAR FOR A MOTOR VEHICLE**

(71) Applicant: Mahle International GmbH, 70376 Stuttgart (DE)
(72) Inventor: Person, Eddy, 08430 Guignicourt sur Vence (FR); Pihet, David, 54560 Beuvillers (FR); Maliarik, Michal, 80501 Senica (SI)
(74) Representative: BRP Renaud & Partner mbB Rechtsanwälte Patentanwälte Steuerberater

(57) **Abstract**

The invention relates to an air conditioning system (1), in particular for a motor vehicle,
- with a housing (2) delimiting a housing interior (3) for the receiving or the directing of a fluid, in particular air,
- with at least one opening (4) present on the housing (2) for directing the fluid into the housing interior (3) or out from the housing interior (3),
- wherein the opening (4) has an opening collar (5) projecting outwards, away from the housing interior (3), on the circumferential wall (21) of which there is arranged on the outer side a sealing collar (6), constructed in one piece and circumferential in circumferential direction (U), which surrounds the opening collar (5).

## Description

The invention relates to an air condition system, in particular for a motor vehicle, and a motor vehicle with such an air conditioning system. The invention further relates to a method for producing such an air conditioning system.

Air conditioning systems of motor vehicles serve to increase the travelling comfort in the interior of the motor vehicle. For this, the air conditioning system provides in the interior an air flow which is felt to be comfortable by the occupants with regard to temperature and air humidity, which air flow can be directed into the interior of the vehicle via suitable air-carrying ducts. The different components of the air conditioning system generally comprise respectively a housing, on which openings are provided for directing air into or respectively out from the housing interior. At said housing openings, suitably constructed fluid ducts can be mounted, which are usually constructed in the manner of tube bodies, so that via the fluid ducts air is directed from the housing of a component of the air conditioning system to the housing of another component.

An air-tight mounting of said fluid ducts in the openings is of considerable importance here, in order to prevent an exit of air from the housing or respectively from the fluid duct toward the exterior into the environment. Vice versa, of course a penetration of ambient air into the duct system of the air conditioning system is also to be prevented.

It is therefore an object of the present invention to provide an improved embodiment of an air conditioning system, which is distinguished with regard to its tightness by an improved transition from the housing to the fluid duct.
This problem is solved by the subject of the independent claims. Preferred embodiments are the subject of the dependent claims.

Accordingly, a fundamental idea of the invention is to arrange on an opening collar, surrounding a housing opening, a one-piece sealing collar, which is, at it were, "slipped over" the opening collar. By means of such a sealing collar, a sealing effect can be achieved which is improved compared with conventional solutions, when a fluid duct, typically in the form of a tube body, is mounted on the opening. Such a mounting takes place typically by inserting the tube body into the opening collar of the housing. In this case, the sealing collar essential to the invention seals the interior, delimited by the opening collar and by the tube body, in a particularly good fluid-tight manner with respect to the exterior environment. An undesired entry of air from the environment into the interior at the transition between opening and fluid duct and, vice versa, an exit of air-conditioned air directed through the interior of the housing or respectively of the fluid duct outwards, is prevented in this manner.

An air conditioning system according to the invention has a housing, delimiting a housing interior, for receiving or for directing a fluid, in particular air. On the housing, at least one opening is present which serves for directing the fluid into the housing interior or out from the housing interior. The opening has an opening collar projecting outwards, away from the housing interior. On a circumferential wall of the opening collar there is arranged on the outer side a sealing collar, constructed in one piece and circumferential in circumferential direction, which surrounds the opening collar preferably completely.

Particularly preferably, the sealing collar is fastened to the opening collar by means of an adhesive connection. This permits a permanent and fluid-tight connection of the sealing collar on the opening collar.

In another preferred embodiment, the sealing collar is constructed as a hollow cylinder. The sealing collar has an axial section in which an internal circumferential side of the circumferential wall of the sealing collar lies flat against an external circumferential side of the opening collar. In this way, a large contact surface between opening collar and sealing collar is produced, which promotes a high sealing effect of the sealing collar.

Particularly expediently, the adhesive connection can be provided between the external circumferential side of the opening collar and the internal circumferential side of the sealing collar. This promotes a permanent fixing of the sealing collar on the opening collar.

A particularly good sealing effect can be achieved by means of the sealing collar, when its axial section continues away from the housing into an end section which projects axially over the opening collar.

In an advantageous further development, the end section of the sealing collar continues away from the axial section into a margin section, which projects radially inwards from the axial end section. By means of this measure, the sealing effect of the sealing collar can be improved once again.

Particularly preferably, the margin section at least partially covers a face side of the opening collar facing away from the housing interior. This measure also improves the sealing effect to a not insignificant extent.

In an advantageous further development, the adhesive connection is provided between the margin section of the sealing collar and the face side of the opening collar facing away from the housing interior. This leads to a particularly stable fixing of the sealing collar on the opening collar.

In a further advantageous further development, a circumferential chamfer is present on the external circumferential side of the opening collar in a transition region to the face side. The sealing collar is constructed in a complementary manner to the chamfer, and namely such that the sealing collar lies flat against the opening collar in the region of the chamfer.

Particularly preferably, the sealing collar can be constructed as a one-piece stamped part. In this way, undesired contact surfaces which could reduce the tightness of the sealing collar are avoided.

Particularly expediently, the sealing collar can comprise a collar material of an elastomer. As such an elastomer typically has spring-elastic characteristics, in this way the sealing effect of the sealing collar can be further improved.

The invention furthermore relates to a motor vehicle with a previously presented air conditioning system. In the opening provided on the housing, a fluid duct, preferably for the directing of air, is inserted in a fluid-tight manner. The transition between fluid duct and opening collar of the opening is sealed in this way in a fluid-tight, in particular air-tight, manner.

Finally, the invention relates to a method, comprising several method steps, for producing an air conditioning system, in particular the previously explained air-conditioning system.

In a first step a) a housing is provided, which delimits a housing interior. On the housing, at least one opening is constructed for directing the fluid into the housing interior or out from the housing interior. This opening has an opening collar projecting outwards away from the housing interior.

In a second step b) a sealing collar, constructed substantially hollow-cylindrically, is positioned coaxially and at a distance with respect to the opening.

In a third step c) the sealing collar is moved towards the opening collar along its axial direction. This takes place until a radially inner section of the face side of the sealing collar, facing the housing, lies flat on a face side of the opening collar facing away from the housing interior.

In a fourth step d) a radially outer section of the sealing collar is bent towards the opening collar. This takes place such that this section of the sealing collar lies flat against the outer circumferential face of the opening collar.

According to a preferred embodiment of the method, before the carrying out of step d) an adhesive is applied on the external circumferential side and on a face side of the opening collar facing away from the housing interior. This takes place such that the sealing collar, after bending according to step d), forms an adhesive connection with the opening collar. In this way, the sealing collar can be fastened permanently in a mechanically stable and fluid-tight manner on the opening collar.

Alternatively or additionally, before carrying out step d) an adhesive can also be applied on the face side of the sealing collar facing the housing, so that the sealing collar, after bending according to step d), forms an adhesive connection with the opening collar. This measure also promotes a permanent and fluid-tight fastening of the sealing collar on the opening collar.

There are shown, respectively diagrammatically:
- Fig. 1: an example of an air conditioning system according to the invention, in perspective illustration,
- Fig. 2: a detail illustration of the housing of the air conditioning system of Figure 1 in the region of an opening provided on the housing,
- Fig. 3: the housing of Figure 2 in a longitudinal section along the axial axis of a hollow-cylindrical opening collar surrounding the opening,
- Fig. 4, 5: illustrations illustrating the mounting of a sealing collar on the opening collar.

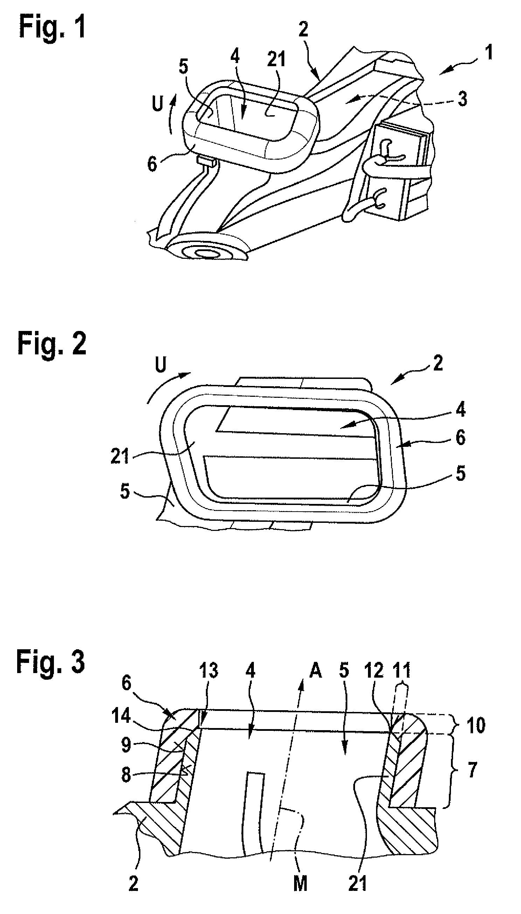

Figure 1 shows an example of an air conditioning system 1 according to the invention, in perspective illustration. The air conditioning system 1 comprises a housing 2, delimiting a housing interior 3, for the receiving and/or for the directing of air. As Figure 1 shows, on the housing 2 an opening 4 for the directing of the air into the housing interior 3 or for the directing of the air out from the housing interior 3 is present.

Figure 2 shows the housing 2 in the region of the opening 4 in a detail illustration. The opening 4 accordingly has an opening collar 5 projecting outwards, away from the housing interior 3. On a circumferential wall 21 of the opening collar 5 on the outer side a sealing collar 6 is arranged, circumferential in circumferential direction U and constructed in one piece, which surrounds the opening collar 5. Preferably, the sealing collar 6 is constructed as a one-piece stamped part.

Preferably, the sealing collar 6 has a collar material of an elastomer. The opening collar 5 projects from the housing 2 in the manner of an inlet- or outlet connection and has substantially the geometry of a hollow cylinder. The illustration of Figure 3 clarifies this, which shows the hollow-cylindrical opening collar 5 in a longitudinal section along its centre longitudinal axis M, which defines an axial direction of the opening collar 5.

According to Figure 3, the sealing collar 6 is also constructed as a hollow cylinder and has an axial section 7. In the region of the axial section 7, an internal circumferential side 8 of the sealing collar 6 lies flat against an external circumferential side 9 of the circumferential wall 21 of the opening collar 5. The axial section 7 of the sealing collar 6 continues away from the housing 2 into an axial end section 10, which lies opposite the housing 2 and projects beyond the opening collar 5 in the axial direction A away from the housing interior 3. The axial end section 10 of the sealing collar 6, in turn, continues away from the axial section 7 into a margin section 11, which projects radially inwards from the end section 10.

As Figure 3 shows, the margin section 11 partially covers a face side 12 of the opening collar 5 facing away from the housing 2. As the illustration of Figure 3 further demonstrates, a circumferential chamfer 14 is formed on the external circumferential side 8 of the opening collar 5 in the transition region 13 to the face side 12. In the region of the chamfer 14 the sealing collar 6 is constructed in a complementary manner to the chamfer 14. This means that the sealing collar 6 lies flat against the opening collar 5 in the region of the chamfer 14. By means of the chamfer 14, the sealing collar 6 can be fixed in the region of the face side 12 of the opening collar 5 in a particularly precise manner on the latter.

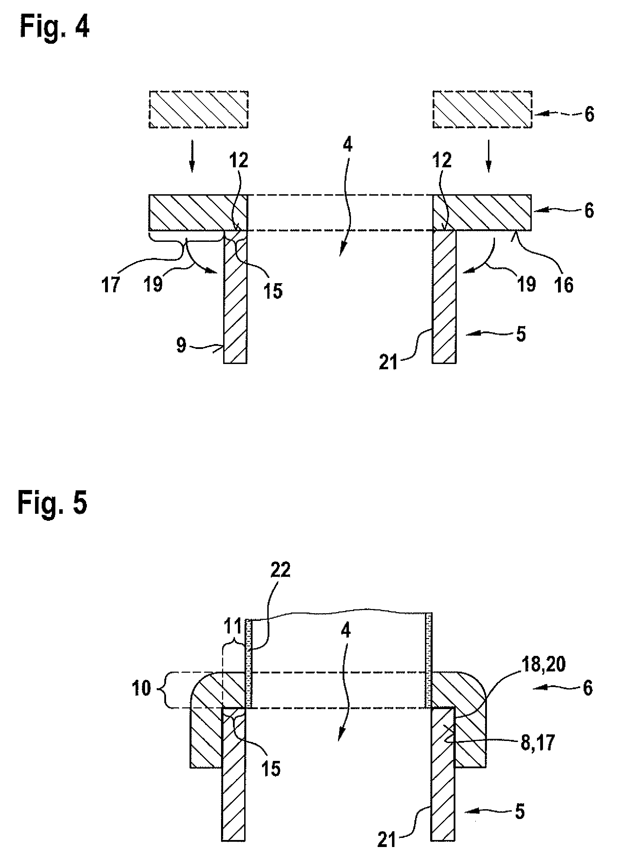

Preferably, the sealing collar 6 is fastened on the opening collar 5 by means of an adhesive connection 20. Such an adhesive connection 20 with the use of a suitable adhesive 18 can be provided in the course of the mounting of the sealing collar 6 on the opening collar 5, which is to be explained in further detail below with the aid of Figures 4 and 5. The adhesive connection 20 between the sealing collar 6 and the opening collar 5 of the housing 2 is preferably provided between the external circumferential side 9 of the circumferential wall 21 of the opening collar 5 and the internal circumferential side 8 of the sealing collar 6. In addition, the adhesive connection 20 can also be formed between the margin section 11 of the sealing collar 6 and the face side 12 of the opening collar 5 facing away from the housing interior 3.

For the purpose of mounting the air conditioning system 1, according to Figure 4 in a first step a) a housing 2 is provided, which delimits a housing interior 3. On the housing 2, as already explained with the aid of Figures 1 to 3, an opening 4 is formed for the directing of air into the housing interior 3 or respectively out from the housing interior 3. The opening 4 has an opening collar 5 projecting outwards, away from the housing interior 3.

In a second step b) a sealing collar 6, constructed substantially hollow-cylindrically, is positioned coaxially and at a distance with respect to the opening 4, as is indicated in Figure 4 with the aid of the dashed illustration of the sealing collar 6.

In a third step c), the sealing collar 6 is moved towards the opening collar 5 in the axial direction A of the opening collar 5 until a radially inner section 15 of the face side 15 of the sealing collar 6, facing the housing 2 (not shown in Figure 4 for the sake of clarity) lies flat on the face side 12 of the opening collar facing away from the housing interior 3 (not shown).

In a fourth step d) of the mounting method, a radially outer section 17 of the sealing collar 6, which is constructed in a complementary manner to the radially inner section 15, is bent towards the opening collar 5. This takes place such that this section 17 lies flat against the external circumferential side 9 of the opening collar 5. Such a bending of the sealing collar 6 is indicated in Figure 4 by the two arrows with the reference number 19. The arrangement of the sealing collar 6 and opening collar 5 resulting after the bending is shown in Figure 5. It can be seen that the section 17, after the bending, forms the internal circumferential side 8 of the sealing collar 6.
Alternatively or additionally, before carrying out step d), the adhesive 18 can also be applied on the face side 16 of the sealing collar 6 facing the housing 2. In both cases, the sealing collar 6, after the bending according to step d), forms an adhesive connection with the opening collar 5 by means of the adhesive 18.

It shall be understood that the applying of the adhesive 18 does not have to take place immediately before the carrying out of step d), in particular after the carrying out of step c). Rather, it is merely necessary to apply the adhesive 18 before the bending according to step d) on the sealing collar 6 and/or on the opening collar 5.

After the previously described mounting of the sealing collar 6 on the opening collar 5, a fluid duct 22 can be inserted into the opening 4, which can be realized as a conventional tube body. The sealing collar 6 then provides for a fluid-tight connection between the opening collar 5 and the fluid duct 22.

## Claims

1. An air conditioning system (1), in particular for a motor vehicle,
- with a housing (2) delimiting a housing interior (3) for the receiving or the directing of a fluid, in particular air,
- with at least one opening (4) present on the housing (2) for directing the fluid into the housing interior (3) or out from the housing interior (3),
- wherein the opening (4) has an opening collar (5) projecting outwards, away from the housing interior (3), on the circumferential wall (21) of which there is arranged on the outer side a sealing collar (6), constructed in one piece and circumferential in circumferential direction (U), which surrounds the opening collar (5).

2. The air conditioning system according to Claim 1,
**characterized in that**
the sealing collar (6) is fastened to the opening collar (5) by means of an adhesive connection (18).

3. The air conditioning system according to Claim 1 or 2,
**characterized in that**
the sealing collar (6) is constructed as a hollow cylinder and has an axial section (7), in which an internal circumferential side (8) of the circumferential wall of the sealing collar (6) lies flat against an external circumferential side (9) of the opening collar (5).

4. The air conditioning system according to Claim 3,
**characterized in that**
the adhesive connection (18) is provided between the external circumferential side (9) of the opening collar (5) and the internal circumferential side (8) of the sealing collar (6).

5. The air conditioning system according to Claim 3 or 4,
**characterized in that**
the axial section (7) of the sealing collar (6) continues away from the housing (2) into an axial end section (10), which projects axially over the opening collar (5).

6. The air conditioning system according to Claim 5,
**characterized in that**
the end section (10) of the sealing collar (6) continues away from the axial section (10) into a margin section (11), which projects radially inwards from the axial end section (10).

7. The air conditioning system according to Claim 6,
**characterized in that**
the margin section (11) at least partially covers a face side (12) of the opening collar (5) facing away from the housing interior (3).

8. The air conditioning system according to Claim 5 or 6,
**characterized in that**
the adhesive connection (18) is provided between the margin section (11) and the face side (12) of the opening collar (5) facing away from the housing interior (3).

9. The air conditioning system according to one of the preceding claims,
**characterized in that**
- on the external circumferential side (9) of the opening collar (5) a circumferential chamfer (14) is present in a transition region (13) to the face side (12),
- the sealing collar (6) is constructed in a complementary manner to the chamfer (14), such that the sealing collar (6) lies against the opening collar (5) in the region of the chamfer (14).

10. The air conditioning system according to one of the preceding claims,
**characterized in that**
the sealing collar (6) is constructed as a one-piece stamped part.

11. The air conditioning system (1) according to one of the preceding claims,
**characterized in that**
the sealing collar (6) comprises a collar material of an elastomer.

12. A motor vehicle
- with an air conditioning system (1) according to one of the preceding claims,
- with a fluid duct (22) inserted in a fluid-tight manner into the opening (4) of the housing (2).

13. A method for producing an air conditioning system (1) for directing a fluid, in particular according to one of the preceding claims,
comprising the following steps:
a) providing a housing (2), delimiting a housing interior (3), on which housing at least one opening (4) is formed for directing the fluid into the housing interior (3) or out from the housing interior (3),
wherein the opening (4) has an opening collar (5) projecting outwards, away from the housing interior (3),
b) positioning of a substantially hollow-cylindrically constructed sealing collar (6) coaxially and at distance with respect to the opening (4),
c) moving the sealing collar (6) towards the opening collar (5) along its axial direction (A), until a radially inner section (15) of the face side (16) of the sealing collar (6) facing the housing (2) lies flat on a face side (12) of the opening collar (5) facing away from the housing interior (3),
d) bending a radially outer section (17) of the hollow-cylindrical sealing collar (6) towards the opening collar (5), such that this section (17) of the sealing collar (6) lies flat against an external circumferential side (9) of the opening collar (5).

14. The method according to Claim 13,
**characterized in that**
before the carrying out of step d), an adhesive (18) is applied on the external circumferential side (9) and on a face side (12) of the opening collar (5) facing away from the housing interior (3), so that the sealing collar (6), after the bending according to step d), forms an adhesive connection (20) with the opening collar (5).

15. The method according to Claim 13 or 14,
**characterized in that**
before the carrying out of step d), an adhesive (18) is applied on the face side (16) of the sealing collar (6) facing the housing (2), so that the sealing collar (6), after the bending according to step d) forms an adhesive connection (20) with the opening collar (5).
